# EUROPÄISCHE PATENTSCHRIFT

(11) **EP 1 216 868 B1**
(45) Veröffentlichungstag und Bekanntmachung des Hinweises auf die Patenterteilung: **20.08.2003**
(21) Anmeldenummer: 01130392.2
(22) Anmeldetag: 20.12.2001
(51) Int. Cl.: B60J 7/00

(54) **Öffnungsfähiges Fahrzeugdach mit Einklemmschutz und Verfahren zum Betreiben desselben**
Openable vehicle roof with anti-jamming protection and corresponding method
Toit ouvrant pour vehicule avec dispositif anti-pincement et procédé correspondant

(30) Priorität: 22.12.2000 DE 10064702
(43) Veröffentlichungstag der Anmeldung: 26.06.2002
(73) Patentinhaber: Webasto Vehicle Systems International GmbH, 82131 Stockdorf (DE)
(72) Erfinder: Schober, Stefan, 82362 Weilheim (DE); Hahn, Ferdinand, 86911 Diessen (DE); Appel, Josef, 82131 Gauting (DE)
(74) Vertreter: Konnerth, Dieter Hans

(56) Entgegenhaltungen:
- DE-A- 4 221 043
- DE-A- 19 639 867
- DE-A- 19 833 811
- US-A- 4 331 359
- US-A- 5 372 401

## Beschreibung

Die vorliegende Erfindung betrifft ein öffnungsfähiges Fahrzeugdach gemäß dem Oberbegriff von Anspruch 1 sowie ein Verfahren zum Betreiben eines solchen Fahrzeugdaches.

Ein öffnungsfähiges Fahrzeugdach ist beispielsweise aus der DE 198 33 811 A1 bekannt. Bei dem Schließelement handelt es sich dabei um den Deckel eines Schiebehebedaches, während es sich bei dem Abdeckelement um einen verschiebbaren Dachhimmel handelt. Im Bereich des vorderen Dachöffnungsrands ist ein Drucksensor vorgesehen, der ungefähr in der Ebene, in welcher sich der Schiebehimmel bewegt, oder leicht oberhalb derselben angeordnet ist. Auf diese Weise kann der Drucksensor sowohl ein Einklemmen eines Gegenstands bzw. Körperteils zwischen dem vorderen Deckelrand und dem Sensor als auch zwischen dem vorderen Rand des Schiebehimmels und dem Sensor erkennen. Dadurch wird das Einklemmen eines Gegenstands bzw. Körperteils durch den Schiebehimmel vermieden.

Das Realisieren eines Einklemmschutzes für einen verstellbaren Deckel eines öffnungsfähigen Fahrzeugdaches mittels an der Deckelvorderkante oder dem vorderen Rand der Dachöffnung angebrachten Einklemmsensoren, die beispielsweise als piezoelektrische Drucksensoren oder in Form von Lichtleitfasern ausgebildet sein können, ist allgemein bekannt, siehe beispielsweise DE 37 31 428 A1 und DE 195 35 796 A1. Da diese Drucksensoren über die gesamte Breite der Dachöffnung bzw. des Deckels vorgesehen sein müssen, um einen wirksamen Einklemmschutz zu realisieren, insbesondere in Form von Sensorleisten, ist ein solcher Einklemmschutz sehr aufwendig. Wird andererseits aus Kostengründen die Zahl bzw. Ausdehnung der Sensoren verringert, ist der Einklemmschutz nicht mehr vollständig.

Ferner ist es bekannt, einen Einklemmschutz für verstellbare Deckel eines öffnungsfähigen Fahrzeugdaches durch Überwachung von Betriebsparametern des Deckelantriebsmotors zu realisieren. Dabei kann der Motorstrom, dessen zeitliche Änderung bzw. das Drehmoment des Antriebsmotors oder dessen Änderung sowie die Drehzahl bzw. Drehzahländerung des Motors überwacht werden. Beispielhaft seien hier die DE 198 40 161 A1, DE 198 40 162 A1, DE 198 40 163 A1, DE 198 40 164 A1, DE 39 29 986 C2, DE 196 18 219 A1 sowie DE 195 07 541 C1 genannt. Diese Verfahren werden auch "indirekte" Verfahren genannt. Problematisch bei diesen indirekten Verfahren ist, dass die meist stark nicht-lineare Kinematik des Deckels die Detektion von Einklemmvorgängen bis zur Unmöglichkeit hin erschwert, so dass die Zuverlässigkeit solcher Verfahren oft oder zumindest unter bestimmten Betriebsbedingungen nicht ausreichend ist.

Ein gattungsmäßiges Fahrzeugdach ist aus der DE 196 39 867 A bekannt.

Es ist Aufgabe der vorliegenden Erfindung, ein Fahrzeugdach mit einem verstellbaren Schließelement und einem verstellbaren Abdeckelement sowie ein Verfahren zum Betreiben desselben zu schaffen, wobei ein möglichst zuverlässiger und umfassender Einklemmschutz auf möglichst einfache und kostengünstige Weise realisiert werden soll.

Diese Aufgabe wird erfindungsgemäß gelöst durch ein Fahrzeugdach gemäß Anspruch 1 sowie ein Verfahren zum Betreiben eines solchen Fahrzeugdaches gemäß Anspruch 14. Bei dieser erfindungsgemäßen Lösung ist vorteilhaft, dass ein separater Einklemmschutz für das Schließelement entfallen kann, da durch entsprechende Steuerung des Abdeckelements immer sichergestellt ist, dass eine beabsichtigte Bewegung des Schließelements zu keinem Einklemmen von Körperteilen zwischen dem Schließelement und dem Dachöffnungsrand führen kann. Der wesentliche Vorteil besteht nun darin, dass die Anforderungen an die Schließbewegung des Schließelements im allgemeinen stark unterschiedlich von den Anforderungen an die Schließbewegung des Abdeckelements sind, wobei einerseits für das Schließelement eine viel höhere Schließkraft erforderlich ist, um ein dichtes Verschließen der Dachöffnung zu ermöglichen, und andererseits die Kinematik der Bewegung des Schließelements in der Regel wesentlich stärker nichtlinear als die Kinematik der Bewegung des Abdeckelements ist. Aufgrund der geringeren Schließkraft kann unter Umständen bei dem Abdeckelement auf einen Einklemmschutz verzichtet werden, oder falls ein Einklemmschutz für das Abdeckelement erforderlich ist, kann er in zuverlässiger Weise mittels eines sogenannten indirekten Verfahrens, bei welchem beispielsweise der Strom des Antriebsmotors oder die Drehzahl des Antriebsmotors überwacht wird, realisiert werden, da aufgrund der wesentlich stärker linearen Kinematik der Bewegung des Abdeckelements solche Verfahren hier zuverlässig arbeiten und keine aufwendige Sensorleiste am Abdeckelement oder am Rand der Dachöffnung erforderlich ist.

Bevorzugte Ausgestaltungen der Erfindung ergeben sich aus den Unteransprüchen.

Im folgenden wird die Erfindung anhand der beigefügten Zeichnungen beispielhaft näher erläutert. Es zeigen:
- Fig. 1: schematisch eine Seitenansicht eines erfindungsgemäßen Fahrzeugdaches in einer ersten Stellung; und
- Fign. 2 bis 6: eine ähnliche Ansicht wie Fig. 1, wobei jedoch unterschiedliche Stellungen der verstellbaren Dachelemente dargestellt sind.

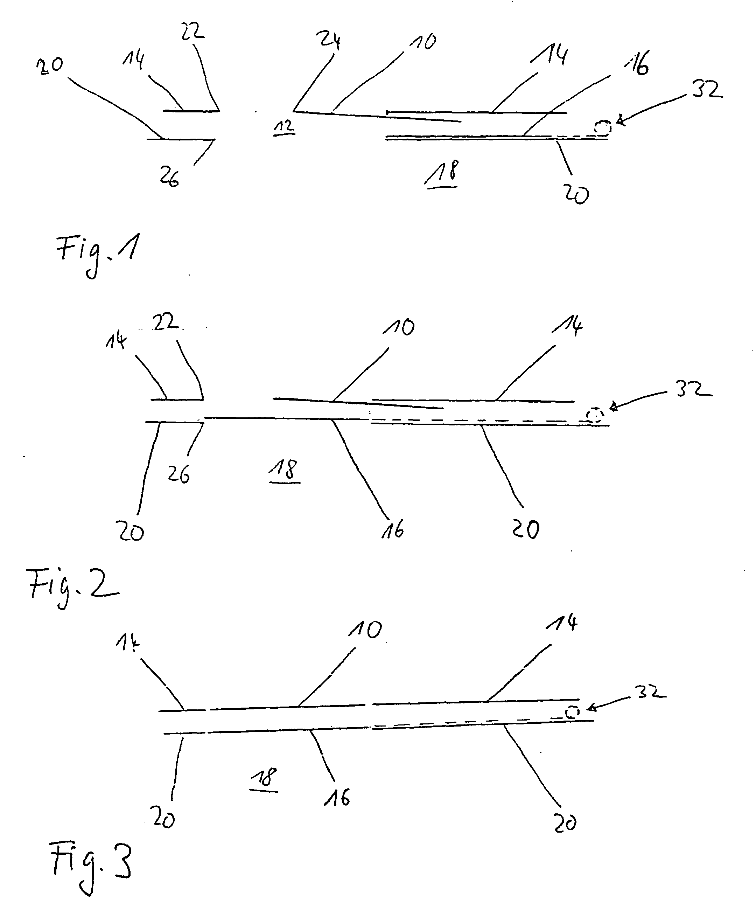

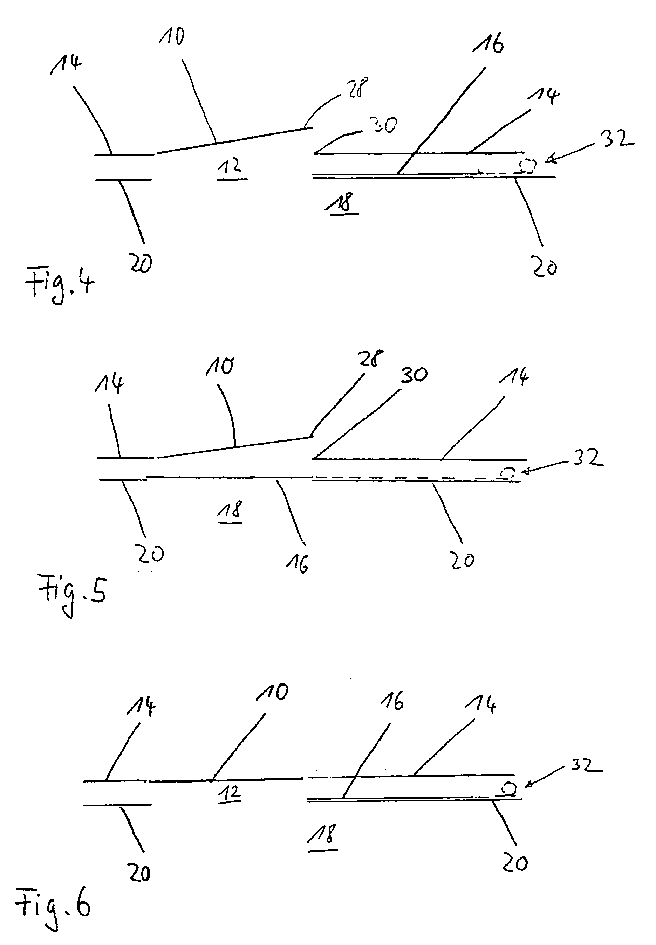

In Fig. 1 ist ein Schiebehebedach gezeigt, wobei der Deckel 10, der zum Verschließen einer Dachöffnung 12 in einer festen Dachhaut 14 vorgesehen ist, in einer Stellung dargestellt ist, in welcher er in etwa zur Hälfte nach hinten unter die feste Dachhaut 14 geschoben ist und die Dachöffnung 12 somit zur Hälfte freigibt (Schiebedachfunktion). Der Deckel 10 ist transparent ausgebildet, um auch im geschlossenen Zustand, der in Fig. 3 und Fig. 6 dargestellt ist, einen Lichteinfall durch den Deckel 10 hindurch zu erlauben. Ein als Sonnenschutz wirkender Schiebehimmel 16 ist vorgesehen, um die Öffnung 12 bzw. bei geschlossenem Deckel den Deckel 10 bezüglich des Fahrzeuginnenraums 18 wahlweise abzudecken bzw. mindestens zum Teil freizugeben. Außerhalb der Dachöffnung 12 ist unterhalb der festen Dachhaut 14 ein Festhimmel 20 in üblicher Weise vorgesehen, um die feste Dachhaut 14 bezüglich des Innenraums 18 zu verdecken. In Fig. 1 ist der Schiebehimmel 16 in einer Stellung dargestellt, in welcher er vollständig nach hinten über den Festhimmel 20 geschoben ist, um die Dachöffnung 12 und den in sie hineinragenden Teil des Deckels 10 vollständig freizulegen und um damit ungehinderten Lichteinfall und ungehinderten Luftstrom zu ermöglichen.

Der Deckel 10 wird in an sich bekannter Weise von einem schematisch mit unterbrochenen Linien dargestellten Antrieb 32 angetrieben, welcher einen Elektromotor, ein von diesem angetriebenes Ritzel sowie zwei drucksteife Antriebskabel umfassen kann, welche ihrerseits von dem Ritzel angetrieben werden. Der Schiebehimmel 16 kann in ähnlicher Weise von einem eigenen Elektromotor angetrieben werden. Die beiden Motoren werden von einer vorzugsweise digital ausgebildeten Steuerung gesteuert, welche so programmiert ist, dass vor dem Beginn von Bewegungen des Deckels 10, welche zum Einklemmen von Körperteilen oder Gegenständen zwischen dem vorderen Dachöffnungsrand 22 und der Deckelvorderkante 24 führen könnten, der Schiebehimmel 16 so positioniert wird, dass der von dem Deckel 10 momentan nicht abgedeckte Teil der Dachöffnung 12 von dem Schiebehimmel 16 so weit verdeckt wird, dass dieser offene Teil der Öffnung 12 vom Innenraum 18 aus nicht zugänglich ist, so dass keine Körperteile oder Gegenstände vor dem Schließen des Deckels 10 in den momentan nicht von dem Deckel 10 verdeckten Teil der Dachöffnung 12 gelangen können.

Demgemäß wird, wenn der Bediener den Deckel 10 aus der in Fig. 1 gezeigten Zwischenstellung in die in Fig. 3 dargestellte Schließstellung bringen will, indem er ein entsprechendes nicht dargestelltes Bedienelement für den Antrieb des Deckels 10 betätigt, die Schließbewegung des Deckels 10 so lange verzögert, bis der Schiebehimmel 16 in die in Fig. 2 dargestellte Stellung gebracht wurde, in welcher er den vom Deckel 10 nicht abgedeckten Teil der Dachöffnung 12 von unten vollständig verdeckt, so dass von unten keine Gegenstände oder Körperteile in den offenen Teil der Dachöffnung 12 gelangen können. Im geschilderten Beispiel verdeckt der Schiebehimmel 16 dabei die Dachöffnung 12 vollständig. Die Steuerung des Schiebehimmels 16 ist so ausgebildet, dass der Übergang aus der in Fig. 1 gezeigten Stellung in die in Fig. 2 gezeigte Stellung automatisch durch die Betätigung des Bedienelements für den Deckel 10 zum Schließen des Deckels 10 erfolgt. Erst wenn der Schiebehimmel 16 die in Fig. 2 gezeigte Stellung erreicht hat, beginnt die Steuerung mit dem Schließen des Deckels 10, welches nun gefahrlos ohne die Möglichkeit des Einklemmens eines Gegenstands oder Körperteils erfolgen kann. Auf diese Weise kann auf einen Einklemmschutz für den Deckel 10, wie beispielsweise durch das Vorsehen von Sensorleisten am vorderen Deckelrand 24 oder dem vorderen Dachöffnungsrand 22, verzichtet werden.

Je nach Schließkraft des Schiebehimmels 16 kann es jedoch erforderlich oder vorteilhaft sein, den Schiebehimmel 16 mit einem Einklemmschutz zu versehen, um ein Einklemmen eines Gegenstands oder Körperteils zwischen dem vorderen Rand 26 des Festhimmels und dem vorderen Dachöffnungsrand 22 zu verhindern. Aufgrund der relativ hohen Linearität der Kinematik des Schiebehimmels 16 kann dieser Einklemmschutz jedoch auf zuverlässige Weise durch ein sogenanntes indirektes Verfahren realisiert werden, wobei mindestens ein Betriebsparameter des Antriebsmotors für den Schiebehimmel 16 überwacht wird, wie beispielsweise der Motorstrom und/oder die Motordrehzahl bzw. deren zeitliche Änderungen. Solche Verfahren sind zur Überwachung von Dachdeckeln bekannt, bieten jedoch aufgrund der oft hohen Nichtlinearität der Deckelkinematik für die Überwachung von Dachdeckeln keinen zuverlässigen Einklemmschutz.

In der Fig. 4 ist eine Stellung des Deckels 10 gezeigt, in welcher er mit seiner Hinterkante 28 über den hinteren Rand 30 der festen Dachhaut 14 angehoben ist, um eine Entlüftungsstellung zu realisieren. Gemäß Fig. 4 ist dabei der Schiebehimmel 16 wie in Fig. 1 vollständig nach hinten über den Festhimmel 20 geschoben, um die Dachöffnung 12 vollständig frei zu geben. Soll der Deckel 10 aus dieser Stellung geschlossen werden, indem seine Hinterkante 28 abgesenkt wird, besteht die Gefahr, dass in dem Spalt zwischen der Hinterkante 28 und dem hinteren Dachöffnungsrand 30 Gegenstände oder Körperteile eingeklemmt werden. Um dies zu verhindern, wird beim Einleiten des Schließens des Deckels 10 aus der in Fig. 4 gezeigten Stellung durch den Bediener die Antriebssteuerung des Schiebehimmels 16 dazu veranlasst, den Schiebehimmel 16 zunächst, d.h. bevor der Antrieb des Deckels 10 veranlasst wird, das Absenken der Deckelhinterkante 28 vorzunehmen, in die in Fig. 5 gezeigte Stellung gebracht, in welcher der Schiebehimmel 16 die Dachöffnung 12 vollständig verdeckt, um zu verhindern, dass Gegenstände oder Körperteile aus dem Fahrzeuginnenraum 18 in den Spalt zwischen der Deckelhinterkante 28 und dem hinteren Rand 30 der Dachöffnung 12 gelangen können. Erst nachdem der Schiebehimmel 16 die in Fig. 5 gezeigte Stellung erreicht hat, beginnt die Steuerung des Antriebs des Deckels 10 damit, den Antrieb des Deckels 10 zum Absenken der Deckelhinterkante 28 zu veranlassen.

In Fig. 6 ist schließlich eine Stellung gezeigt, in welcher der Deckel 10 vollständig geschlossen ist, jedoch der Schiebehimmel 16 in eine Stellung gebracht wurde, in welcher er die Dachöffnung 12, d.h. in diesem Fall die Sicht auf den Deckel 10, vollständig freigibt, um einen ungehinderten Lichteinfall durch den transparenten Deckel 10 hindurch zu ermöglichen.

Die vorliegende Erfindung ist nicht auf die beschriebene Verwendung mit einem Schiebe-Hebe-Dach beschränkt. Statt dessen kann es sich bei dem Deckel auch um den oder einen Deckel eines Schiebedaches oder eines Spoilerdaches handeln. Ferner kann die erfindungsgemäße Schiebehimmelsteuerung auch für ein Faltdach bzw. das Festelement eines Faltdaches verwendet werden, oder sie kann als Einklemmschutz für ein Lamellendach verwendet werden. Im letzteren Fall wird der Schiebehimmel immer so positioniert, dass der oder die von dem Lamellenpaket gerade nicht abgedeckte(n) Teil bzw. Teile der Dachöffnung vor dem Schließen des Lamellendachs bzw. vor dem Bewegen des Lamellenpakets von unten durch den Schiebehimmel verdeckt wird bzw. werden. Dies kann so realisiert sein, dass bei jeder Dachschließbewegung der Schiebehimmel in Schließrichtung dem Dach voreilt, wobei er bei vollständig geschlossenem Lamellendach voll beweglich ist, bei geöffnetem Lamellendach aber wieder so weit geschlossen wird, dass der Bereich um das Lamellenpaket abgedeckt ist. Bei einem Lamellendach kann sowohl vor dem Lamellenpaket als auch hinter dem Lamellenpaket ein nicht von den Lamellen abgedeckter Dachöffnungsbereich auftreten.

Grundsätzlich ist es bei der Erfindung nicht erforderlich, dass die Dachöffnung vollständig abgedeckt wird, sondern vielmehr ist ausreichend, dass der gerade offene Bereich der Dachöffnung so weit abgedeckt wird, dass ein Einklemmen eines Gegenstands oder eines Körperteils ausgeschlossen wird.

Die beschriebene Lösung ist für Dachsysteme mit motorisch bewegtem Sonnenschutz bzw. Schiebehimmel besonders kostengünstig, da sie nur eine entsprechende Programmierung der Steuerungssoftware erfordert, jedoch keine zusätzlichen Elemente, wie beispielsweise Sensoren, vorgesehen werden müssen.

## Patentansprüche

1. Öffnungsfähiges Fahrzeugdach mit einem mittels eines Antriebs verstellbaren Schließelement (10) für eine Öffnung (12) in einer festen Dachhaut (14) zum wahlweisen Verschließen bzw. mindestens teilweisen Freilegen der Öffnung, sowie mit einem Abdeckelement (16), welches unterhalb der Dachöffnung und des Schließelements angeordnet ist und mittels eines Antriebs (32) verstellbar ist, um das Schließelement bzw. die Dachöffnung bezüglich des Fahrzeuginnenraums (18) abzudecken oder mindestens teilweise freizugeben,
**dadurch gekennzeichnet,**
**dass** die Steuerungen der Antriebe (32) des Schließelements (10) und des Abdeckelements (16) so gekoppelt sind, dass vor Beginn von Bewegungen des Schließelements (10), welche zum Einklemmen von Köperteilen oder Gegenständen zwischen Schließelement (10) und Dachöffnungsrand (22, 30) führen könnten, das Abdeckelement (16) so positioniert wird, dass der von dem Schließelement (10) nicht abgedeckte Teil der Dachöffnung (12) von dem Abdeckelement (16) mindestens so weit verdeckt wird, dass keine Körperteile oder Gegenstände in den von dem Schließelement (10) nicht abgedeckten Teil der Dachöffnung (12) gelangen können.

2. Fahrzeugdach nach Anspruch 1, **dadurch gekennzeichnet, dass** die Steuerung des Antriebs (32) des Abdeckelements (16) so ausgebildet ist, dass eine Einheit zum Überwachen der Bewegung des Abdeckelements (16) vorgesehen ist, welche den Antrieb des Abdeckelements (16) anhält oder reversiert, wenn sie das Einklemmen eines Körperteils oder Gegenstands durch das Abdeckelement (16) erfasst.

3. Fahrzeugdach nach Anspruch 2, **dadurch gekennzeichnet, dass** die Antriebe (32) des Schließelements (10) und des Abdeckelements (16) elektrisch ausgebildet sind.

4. Fahrzeugdach nach Anspruch 3, **dadurch gekennzeichnet, dass** das Abdeckelement (16) von einem Elektromotor angetrieben wird, wobei die Überwachungseinheit zur Überwachung mindestens eines Betriebsparameters des Elektromotors ausgebildet ist.

5. Fahrzeugdach nach Anspruch 4, **dadurch gekennzeichnet, dass** die Überwachungseinheit zur Überwachung von Strom und/oder Drehzahl des Elektromotors ausgebildet ist.

6. Fahrzeugdach nach einem der Ansprüche 3 bis 5, **dadurch gekennzeichnet, dass** die Steuerung der Antriebe (32) digital ausgebildet ist und die Koppelung der Antriebe durch entsprechende Programmierung der Steuerung realisiert ist.

7. Fahrzeugdach nach einem der Ansprüche 3 bis 6, **dadurch gekennzeichnet, dass** das Schließelement (10) von einem eigenen Elektromotor angetrieben wird.

8. Fahrzeugdach nach einem der vorhergehenden Ansprüche, **dadurch gekennzeichnet, dass** die Steuerung des Antriebs (32) des Abdeckelements (16) so ausgebildet ist, das vor Beginn von Bewegungen des Schließelements (10), welche zum Einklemmen von Köperteilen oder Gegenständen zwischen Schließelement (10) und Dachöffnungsrand (22, 30) führen könnten, das Abdeckelement (16) in eine Stellung gebracht wird, in welcher der von dem Schließelement (10) nicht abgedeckte Teil der Dachöffnung (12) von dem Abdeckelement (16) vollständig abgedeckt wird.

9. Fahrzeugdach nach einem der vorhergehenden Ansprüche, **dadurch gekennzeichnet, dass** es sich bei dem Abdeckelement um einen Schiebehimmel (16) handelt.

10. Fahrzeugdach nach einem der vorhergehenden Ansprüche, **dadurch gekennzeichnet, dass** es sich bei dem Schließelement um den oder einen Deckel (10) eines Schiebedaches, Schiebe-Hebe-Daches oder Spoilerdaches handelt.

11. Fahrzeugdach nach Anspruch 10, **dadurch gekennzeichnet, dass** der Deckel (10) transparent ist.

12. Fahrzeugdach nach einem der Ansprüche 1 bis 8, **dadurch gekennzeichnet, dass** es sich bei dem Schließelement um ein Festelement eines Faltdaches handelt.

13. Fahrzeugdach nach einem der Ansprüche 1 bis 8, **dadurch gekennzeichnet, dass** es sich bei dem Schließelement um den Lamellenverbund eines Lamellendaches handelt.

14. Verfahren zum Betreiben eines öffnungsfähigen Fahrzeugdaches, welches ein mittels eines Antriebs verstellbares Schließelement (10) für eine Öffnung (12) in einer festen Dachhaut (14) zum wahlweisen Verschließen bzw. mindestens teilweisen Freilegen der Öffnung sowie ein Abdeckelement (16) aufweist, welches unterhalb der Dachöffnung (12) und des Schließelements (10) angeordnet ist und mittels eines Antriebs (32) verstellbar ist, um das Schließelement (10) bzw. die Dachöffnung (12) bezüglich des Fahrzeuginnenraums (18) abzudecken oder mindestens teilweise freizugeben, **dadurch gekennzeichnet, dass** die Antriebe (32) des Schließelements (10) und des Abdeckelements (16) so gesteuert werden, dass vor Beginn von Bewegungen des Schließelements (10), welche zum Einklemmen von Köperteilen oder Gegenständen zwischen Schließelement (10) und Dachöffnungsrand (22, 30) führen könnten, das Abdeckelement (16) so positioniert wird, dass der von dem Schließelement (10) nicht abgedeckte Teil der Dachöffnung (12) von dem Abdeckelement (16) mindestens so weit verdeckt wird, dass keine Körperteile oder Gegenstände in den von dem Schließelement (10) nicht abgedeckten Teil der Dachöffnung (12) gelangen können.

15. Verfahren nach Anspruch 14, **dadurch gekennzeichnet, dass** der Antrieb (32) des Abdeckelements (16) so gesteuert und überwacht wird, der Antrieb des Abdeckelements (16) angehalten oder reversiert wird, wenn das Einklemmen eines Körperteils oder Gegenstands durch das Abdeckelement (16) erfasst wird.

## Claims

1. Openable vehicle roof with a closing element (10), which can be adjusted by means of a drive and is intended for an opening (12) in a fixed roof skin (14) and for either closing or at least partially exposing the opening, and with a cover element (16), which is arranged underneath the roof opening and the closing element and can be adjusted by means of a drive (32) in order to cover or at least partially expose the closing element and the roof opening in relation to the vehicle interior (18), **characterised in that** the control systems of the drives (32) of the closing element (10) and the cover element (16) are coupled in such a way that, before the start of movements of the closing element (10) which could lead to parts of the body or objects being trapped between the closing element (10) and the roof-opening edge (22, 30), the cover element (16) is positioned in such a way that the part of the roof opening (12) which is not covered by the closing element (10) is coveted by the cover element (16) at least to an extent such that no parts of the body or objects can enter the part of the roof opening (12) which is not covered by the closing element (10).

2. Vehicle roof according to Claim 1, **characterised in that** the control system of the drive (32) of the cover element (16) is designed in such a way that a unit for monitoring the movement of the cover element (16) is provided, which unit halts or reverses the drive of the cover element (16) when it detects the trapping of a part of the body or an object by the cover element (16).

3. Vehicle roof according to Claim 2, **characterised in that** the drives (32) of the closing element (10) and the cover element (16) are of electric design.

4. Vehicle roof according to Claim 3, **characterised in that** the cover element (16) is driven by an electric motor, the monitoring unit being designed to monitor at least one operating parameter of the electric motor.

5. Vehicle roof according to Claim 4, **characterised in that** the monitoring unit is designed to monitor the current and/or the speed of the electric motor.

6. Vehicle roof according to one of Claims 3 to 5, **characterised in that** the control system of the drives (32) is of digital design, and the coupling of the drives is effected by appropriate programming of the control system.

7. Vehicle roof according to one of Claims 3 to 6, **characterised in that** the closing element (10) is driven by its own electric motor.

8. Vehicle roof according to one of the preceding claims, **characterised in that** the control system of the drive (32) of the cover element (16) is designed in such a way that, before the start of movements of the closing element (10) which could lead to parts of the body or objects being trapped between the closing element (10) and the roof-opening edge (22, 30), the cover element (16) is moved to a position in which the part of the roof opening (12) which is not covered by the closing element (10) is completely covered by the cover element (16).

9. Vehicle roof according to one of the preceding claims, **characterised in that** the cover element is a sliding headliner (16).

10. Vehicle roof according to one of the preceding claims, **characterised in that** the closing element is the or a cover (10) of a sliding roof, a sliding and lifting roof or a spoiler roof.

11. Vehicle roof according to Claim 10, **characterised in that** the cover (10) is transparent.

12. Vehicle roof according to one of Claims 1 to 8, **characterised in that** the closing element is a fixed element of a folding roof.

13. Vehicle roof according to one of Claims 1 to 8, **characterised in that** the closing element is the lamella assembly for a lamella roof.

14. Method of operating an openable vehicle roof, which has a closing element (10), which can be adjusted by means of a drive and is intended for an opening (12) in a fixed roof skin (14) and for either closing or at least partially exposing the opening, and also has a cover element (16), which is arranged underneath the roof opening (12) and the closing element (10) and can be adjusted by means of a drive (32) in order to cover or at least partially expose the closing element (10) and the roof opening (12) in relation to the vehicle interior (18), **characterised in that** the drives (32) of the closing element (10) and of the cover element (16) are controlled in such a way that, before the start of movements of the closing element (10) which could lead to parts of the body or objects being trapped between the closing element (10) and the roof-opening edge (22, 30), the cover element (16) is positioned in such a way that the part of the roof opening (12) which is not covered by the closing element (10) is covered by the cover element (16) at least to an extent such that no parts of the body or objects can enter the part of the roof opening (12) which is not covered by the closing element (10).

15. Method according to Claim 14, **characterised in that** the drive (32) of the cover element (16) is controlled and monitored in such a way that the drive of the cover element (16) is halted or reversed when the trapping of a part of the body or an object by the cover element (16) is detected.

## Revendications

1. Toit ouvrant pour véhicule, muni d'un élément obturateur (10) déplaçable au moyen d'un entraînement et destiné à une ouverture (12) pratiquée dans une tôle rigide de pavillon (14), en vue d'assurer sélectivement l'obturation ou au moins le dégagement partiel de ladite ouverture ; ainsi que d'un élément de recouvrement (16) disposé au-dessous de l'ouverture du pavillon et de l'élément obturateur, et mobile au moyen d'un entraînement (32), afin de recouvrir ou de dégager au moins partiellement ledit élément obturateur ou ladite ouverture du pavillon vis-à-vis de l'habitacle (18) du véhicule,
**caractérisé par le fait**
**que** les commandes des entraînements (32) de l'élément obturateur (10) et de l'élément de recouvrement (16) sont couplées de façon telle que, avant l'amorce de mouvements de l'élément obturateur (10) susceptibles de provoquer le coincement de parties corporelles ou d'objets entre ledit élément obturateur (10) et le bord (22, 30) de l'ouverture du pavillon, l'élément de recouvrement (16) soit positionné de manière que la partie de l'ouverture (12) du pavillon, non recouverte par l'élément obturateur (10), soit occultée par ledit élément de recouvrement (16) au moins d'une ampleur telle que des parties corporelles, ou des objets, ne puissent pas parvenir dans la partie de l'ouverture (12) du pavillon qui n'est pas recouverte par ledit élément obturateur (10).

2. Toit de véhicule, selon la revendication 1, **caractérisé par le fait que** la commande de l'entraînement (32) de l'élément de recouvrement (16) est réalisée de telle sorte qu'il soit prévu, pour surveiller le mouvement de l'élément de recouvrement (16), un ensemble unitaire qui stoppe ou inverse l'entraînement dudit élément de recouvrement (16) lorsqu'il détecte le coincement d'une partie corporelle ou d'un objet, provoqué par ledit élément de recouvrement (16).

3. Toit de véhicule, selon la revendication 2, **caractérisé par le fait que** les entraînements (32) de l'élément obturateur (10) et de l'élément de recouvrement (16) sont de réalisation électrique.

4. Toit de véhicule, selon la revendication 3, **caractérisé par le fait que** l'élément de recouvrement (16) est entraîné par un moteur électrique, l'ensemble unitaire de surveillance étant conçu pour surveiller au moins un paramètre fonctionnel dudit moteur électrique.

5. Toit de véhicule, selon la revendication 4, **caractérisé par le fait que** l'ensemble unitaire de surveillance est conçu pour surveiller le courant et/ou la vitesse de rotation du moteur électrique.

6. Toit de véhicule, selon l'une des revendications 3 à 5, **caractérisé par le fait que** la commande des entraînements (32) est de réalisation numérique, et le couplage desdits entraînements est concrétisé par programmation correspondante de ladite commande.

7. Toit de véhicule, selon l'une des revendications 3 à 6, **caractérisé par le fait que** l'élément obturateur (10) est entraîné par un propre moteur électrique.

8. Toit de véhicule, selon l'une des revendications précédentes, **caractérisé par le fait que** la commande de l'entraînement (32) de l'élément de recouvrement (16) est réalisée de façon telle que, avant l'amorce de mouvements de l'élément obturateur (10) susceptibles de provoquer le coincement de parties corporelles ou d'objets entre ledit élément obturateur (10) et le bord (22, 30) de l'ouverture du pavillon, l'élément de recouvrement (16) soit amené à une position dans laquelle la partie de l'ouverture (12) du pavillon, qui n'est pas recouverte par l'élément obturateur (10), soit totalement recouverte par ledit élément de recouvrement (16).

9. Toit de véhicule, selon l'une des revendications précédentes, **caractérisé par le fait que** l'élément de recouvrement se présente comme un habillage de pavillon coulissant (16).

10. Toit de véhicule, selon l'une des revendications précédentes, **caractérisé par le fait que** l'élément obturateur se présente comme le ou comme un capot (10) d'un toit coulissant, d'un toit relevable et coulissant, ou d'un déflecteur.

11. Toit de véhicule, selon la revendication 10, **caractérisé par le fait que** le capot (10) est transparent.

12. Toit de véhicule, selon l'une des revendications 1 à 8, **caractérisé par le fait que** l'élément obturateur se présente comme un élément fixe d'un toit repliable.

13. Toit de véhicule, selon l'une des revendications 1 à 8, **caractérisé par le fait que** l'élément obturateur se présente comme un assemblage de lamelles d'un toit à lamelles.

14. Procédé d'actionnement d'un toit ouvrant pour véhicule, muni d'un élément obturateur (10) déplaçable au moyen d'un entraînement et destiné à une ouverture (12) pratiquée dans une tôle rigide de pavillon (14), en vue d'assurer sélectivement l'obturation ou au moins le dégagement partiel de ladite ouverture ; ainsi que d'un élément de recouvrement (16) disposé au-dessous de l'ouverture (12) du pavillon et de l'élément obturateur (10), et mobile au moyen d'un entraînement (32), afin de recouvrir ou de dégager au moins partiellement ledit élément obturateur (10) ou ladite ouverture (12) du pavillon vis-à-vis de l'habitacle (18) du véhicule, **caractérisé par le fait que** les entraînements (32) de l'élément obturateur (10) et de l'élément de recouvrement (16) sont commandés de façon telle que, avant l'amorce de mouvements de l'élément obturateur (10) susceptibles de provoquer le coincement de parties corporelles ou d'objets entre ledit élément obturateur (10) et le bord (22, 30) de l'ouverture du pavillon, l'élément de recouvrement (16) soit positionné de manière que la partie de l'ouverture (12) du pavillon, non recouverte par l'élément obturateur (10), soit occultée par ledit élément de recouvrement (16) au moins d'une ampleur telle que des parties corporelles, ou des objets, ne puissent pas parvenir dans la partie de l'ouverture (12) du pavillon qui n'est pas recouverte par ledit élément obturateur (10).

15. Procédé selon la revendication 14, **caractérisé par le fait que** l'entraînement (32) de l'élément de recouvrement (16) est commandé et surveillé de façon telle que ledit entraînement dudit élément de recouvrement (16) soit stoppé ou inversé lors de la détection d'un coincement d'une partie corporelle ou d'un objet, provoqué par ledit élément de recouvrement (16).
